# EUROPÄISCHE PATENTANMELDUNG

(11) **EP 3 379 679 A1**
(43) Veröffentlichungstag der Anmeldung: **26.09.2018**
(21) Anmeldenummer: 17162624.5
(22) Anmeldetag: 23.03.2017
(51) Int. Cl.: H02J 5/00, H02M 7/04, H02M 7/66, H01F 30/04, H01F 30/12

(54) **ELEKTRISCHES ENERGIEVERSORGUNGSSYSTEM**

(71) Anmelder: Siemens Aktiengesellschaft, 80333 München (DE)
(72) Erfinder: Schierling, Hubert, 91052 Erlangen (DE); Weis, Benno, 91334 Hemhofen (DE)

(57) **Zusammenfassung**

Die Erfindung betrifft ein Energieversorgungssystem (1) zur Netzeinspeisung und Netzrückspeisung, aufweisend ein Spannungswandlungsmittel (3), einen aktiven, rückspeisefähigen Gleichrichter (5) und einen netzgeführten Gleichrichter (6), wobei das Spannungswandlungsmittel (3) mit einem Wechselspannungsnetz (2), an welchem im Betrieb eine Netzwechselspannung (ACN) anliegt, und mit dem aktiven, rückspeisefähigen Gleichrichter (5) und/oder mit dem netzgeführten Gleichrichter (6) elektrisch verbunden ist, wobei der aktive, rückspeisefähige Gleichrichter (5) eingangsseitig (7) mit dem Wechselspannungsnetz (2) derart elektrisch verbunden ist, dass im Betrieb eine erste Wechselspannung (AC1) anliegt, wobei der netzgeführte Gleichrichter (6) eingangsseitig (8) derart mit dem Wechselspannungsnetz (2) elektrisch verbunden ist, dass im Betrieb eine zweite Wechselspannung (AC2) anliegt, wobei der aktive, rückspeisefähigen Gleichrichter (5) und der netzgeführte Gleichrichter (6) jeweils ausgangsseitig (9,10) mit einem Gleichspannungsnetz (4), an welchem im Betrieb eine Netzgleichspannung (DCN) anliegt, elektrisch verbunden sind und wobei das Spannungswandlungsmittel (2) derart ausgebildet ist, dass im Betrieb die erste Wechselspannung (AC1) kleiner ist, als die zweite Wechselspannung (AC2).

## Beschreibung

Die Erfindung betrifft ein Energieversorgungssystem zur Netzeinspeisung und Netzrückspeisung. Die Erfindung betrifft weiterhin ein Verfahren zur Energieversorgung mit dem erfindungsgemäßen Energieversorgungssystem.

Obwohl die Energieversorgung industrieller Gebäude und Anlagen bis zum Endverbraucher oftmals durch ein Wechselspannungsnetz realisiert ist, sind die Vorteile, welche sich durch den Einsatz der Energieversorgung bzw. Energieverteilung mittels eines Gleichspannungsnetzes insbesondere für industrielle Endverbraucher ergeben, durchaus bekannt.

Dabei besteht der Vorteil des Gleichspannungsnetzes nicht nur darin, elektrische Energie auf langen Strecken mit möglichst geringen Übertragungsverlusten zu transportieren. So kann beispielsweise der Energieaustausch zwischen elektrischen Geräten im Gegensatz zum Wechselspannungsnetz innerhalb des Gleichspannungsnetzes aufwandsärmer gestaltet werden.
Dies schließt insbesondere eine Kopplung von Speichern für elektrische Energie aber auch eine Kopplung von elektrischen Energiequellen regenerativer Energieerzeuger an das Gleichspannungsnetz mit ein.

Viele elektrische Geräte und Anlagen sind für ihren Betrieb auf Gleichspannung angewiesen. Daher bietet es sich an, die Energieversorgung mittels Gleichspannungsnetzen nicht nur eng begrenzt auf einer lokalen Ebene einzurichten, sondern diese im größeren Umfang in industriellen Gebäuden und Anlagen vorzusehen. Es entfällt damit immer öfter die Notwendigkeit, für jedes einzelne elektrische Gerät oder jeden Anlagenteil, welcher eine entsprechende Gleichspannung benötigt, eine oft mit hohen elektrischen Verlusten einhergehende Wandlung der Wechselspannung des Wechselspannungsnetzes in die Gleichspannung für den Endverbraucher durchzuführen.

Wichtig ist bei diesem Ansatz, dass eine Einspeisung elektrischer Energie aus insbesondere Mittelspannungs- und Niederspannungsnetzen, welche im Allgemeinen als Drehspannungsnetze ausgeführt sind, in das möglichst großflächig und leistungsstark angelegte Gleichspannungsnetz den hohen Anforderungen herkömmlicher Wechselspannungsnetze der Energieversorgung bzw. Energieübertragung vollumfänglich erfüllen kann.

Das bedeutet beispielsweise, dass aufgrund der genannten regenerativen Energieerzeuger am Gleichspannungsnetz, aber auch prozessbedingter Betriebsweisen in elektrischen Anlagen am Gleichspannungsnetz, elektrische Energie aus dem Gleichspannungsnetz in das wechselspannungsgeprägte Mittelspannungs- bzw. Niederspannungsnetz zurückgespeist werden kann und soll. Es muss sichergestellt werden, dass die Netzqualität am Rückspeisepunkt der Einspeisung eingehalten wird, was hier ggf. auch eine Blindleistungskompensation und/oder eine Oberwellenkompensation erfordert.

Nach dem Stand der Technik erfolgt die Einspeisung der elektrischen Energie aus dem Wechselspannungsnetz in das Gleichspannungsnetz entweder mit einem aktiven, rückspeisefähigen Gleichrichter oder einem netzgeführten Gleichrichter.

Für aktive, rückspeisefähige Gleichrichter kommen in einer elektrischen Brückenschaltung meist aktive Leistungshalbleiter zum Einsatz, wie beispielsweise IGBT-Leistungshalbleiter bzw. IGBT-Leistungshalbleitermodule.

Vorteilhaft ist bei diesen aktiven, rückspeisefähigen Gleichrichtern, welche als Hochsetzsteller arbeiten, dass der Energiefluss zwischen dem Wechselspannungsnetz und dem Gleichspannungsnetz in beide Richtungen möglich ist. Als Voraussetzung gilt, dass das Spannungsniveau der gleichgerichteten Wechselspannung des Wechselspannungsnetzes kleiner ist, als die Gleichspannung des Gleichspannungsnetzes. Der bei der Rückspeisung ins Wechselspannungsnetz erzeugte Wechselstrom enthält zudem keine bzw. kaum niederfrequente stromharmonische Oberschwingungen der Netzfrequenz.

Nachteilig für den aktiven, rückspeisefähigen Gleichrichter ist hingegen, dass die Überlastbarkeit der für die Rückspeisung der elektrischen Energie ins Wechselspannungsnetz notwendigen, antiparallel zum aktiven Leistungshalbleiter angeordneten Freilaufdioden bei Auftreten eines kurzzeitig hohen Stroms nur gering ist. Weiterhin treten durch Schaltvorgänge der Leistungshalbleiter des aktiven, rückspeisefähigen Gleichrichters teilweise erhebliche elektrische Verluste auf.

Für netzgeführte Gleichrichter kommen meist passive Leistungshalbleiter, wie Leistungsdioden, als Brückenschaltung zum Einsatz. Vorteilhaft ist, dass ein derartiger netzgeführter Gleichrichter im Vergleich zum aktiven, rückspeisefähigen Gleichrichter oft geringere Kosten und elektrische Verluste bezogen auf dessen elektrische Leistung verursacht. Die Kurzzeitüberlastung der verwendeten Leistungshalbleiter im netzgeführten Gleichrichter, insbesondere der Leistungsdioden, ist im Vergleich zu IGBT-Leistungshalbleitern bzw. Leistungshalbleitermodulen sehr hoch.

Um elektrische Energie in das Gleichspannungsnetz einzuspeisen, muss das Spannungsniveau der gleichgerichteten Wechselspannung des Wechselspannungsnetzes größer sein, als die Gleichspannung des Gleichspannungsnetzes. Nachteilhaft ist demnach, dass bei dieser Art des netzgeführten Gleichrichters der Energiefluss nur in einer Richtung stattfindet, daher keine elektrische Energie aus dem Gleichspannungsnetz in das Wechselspannungsnetz zurückspeisen kann. Darüber hinaus werden in signifikanter Anzahl und Höhe niederfrequente stromharmonische Oberschwingungen der Netzfrequenz erzeugt.

Der Erfindung liegt daher die Aufgabe zugrunde, ein Energieversorgungssystem und ein Verfahren zur Energieversorgung bereitzustellen, was die Energieeinspeisung von elektrischer Energie aus einem Wechselspannungsnetz in ein Gleichspannungsnetz und die Energierückspeisung aus dem Gleichspannungsnetz in das Wechselspannungsnetz auch unter Berücksichtigung der Netzqualität verbessert.

Die Aufgabe wird durch ein Energieversorgungssystem mit den in Anspruch 1 angegebenen Merkmalen gelöst. Ferner wird die Aufgabe durch ein Verfahren zur Energieversorgung nach Anspruch 13 gelöst.

Der Erfindung liegt die Erkenntnis zugrunde, dass der Einsatz entweder eines netzgeführten Gleichrichters oder eines aktiven, rückspeisefähigen Gleichrichters zur Energieversorgung eines Gleichspannungsnetzes jeweils Nachteile mit sich bringt. Diese Nachteile können aufgelöst oder zumindest minimiert werden, wenn ein neues Energieversorgungssystem einen kombinierten Aufbau und Betrieb beider Arten von Gleichrichtern am Wechselspannungsnetz zur Einspeisung und Rückspeisung elektrischer Energie in das Gleichspannungsnetz vorhält und damit synergetische Effekte zur Lösung der Aufgabe erzeugt werden.

Für die Lösung der Aufgabe wird ein Energieversorgungssystem zur Netzeinspeisung und Netzrückspeisung vorgeschlagen, welches ein Spannungswandlungsmittel, einen aktiven, rückspeisefähigen Gleichrichter und einen netzgeführten Gleichrichter aufweist, wobei das Spannungswandlungsmittel mit einem Wechselspannungsnetz, an welchem im Betrieb eine Netzwechselspannung anliegt, und mit dem aktiven, rückspeisefähigen Gleichrichter und/oder mit dem netzgeführten Gleichrichter elektrisch verbunden ist, wobei der aktive, rückspeisefähige Gleichrichter eingangsseitig mit dem Wechselspannungsnetz derart elektrisch verbunden ist, dass im Betrieb eine erste Wechselspannung anliegt, wobei der netzgeführte Gleichrichter eingangsseitig derart mit dem Wechselspannungsnetz elektrisch verbunden ist, dass im Betrieb eine zweite Wechselspannung anliegt, wobei der aktive, rückspeisefähigen Gleichrichter und der netzgeführte Gleichrichter jeweils ausgangsseitig mit einem Gleichspannungsnetz, an welchem im Betrieb eine Netzgleichspannung anliegt, elektrisch verbunden sind und wobei das Spannungswandlungsmittel derart ausgebildet ist, dass im Betrieb die erste Wechselspannung kleiner ist, als die zweite Wechselspannung.

Mit dem erfindungsgemäßen Energieversorgungssystem können mittels der vorteilhaften parallelen Anordnung von netzgeführtem Gleichrichter und aktivem, rückspeisefähigen Gleichrichter am Wechselspannungsnetz die eingangs beschriebenen Nachteile bisheriger Energieversorgungssysteme bei der Einspeisung bzw. Rückspeisung elektrischer Energie im Kontext von Gleichspannungsnetzen behoben werden.

Die Vorteile bezüglich Kosten, geringer elektrischer Verluste und Robustheit des netzgeführten Gleichrichters können hier gezielt für die vorrangige Einspeisung in das Gleichspannungsnetz genutzt werden, indem der netzgeführte Gleichrichter einen Großteil der geforderten elektrischen Leistung in das Gleichspannungsnetz einspeist. Er kann von seinen Leistungsdaten her größer ausgelegt werden, zum Beispiel 20% größer, als der aktive, rückspeisefähige Gleichrichter.

Der aktive, rückspeisefähige Gleichrichter hingegen ist ausgelegt, die vom netzgeführten Gleichrichter erzeugten, nachteilhaft systemimmanent wirkenden, niederfrequenten stromharmonischen Oberschwingungen der Netzfrequenz bei einem gleichzeitigen Betrieb zu kompensieren. Das erfindungsgemäße Energieversorgungssystem ist mit dem aktiven, rückspeisefähigen Gleichrichter ebenfalls dafür ausgelegt, Blindleistung für das Wechselspannungsnetz zu erzeugen.

Bei Netzunterspannung oder Netzausfall des Wechselspannungsnetzes muss der aktive, rückspeisefähige Gleichrichter nicht vom Wechselspannungsnetz getrennt werden, weil der netzgeführte Gleichrichter derart ausgebildet ist, dass dieser das Energieversorgungssystem gegen hohe Ströme - insbesondere hohe Nachladeströme - bei Wiederkehr der Wechselspannung des Wechselspannungsnetzes schützt.

Besonders vorteilhaft ist für das erfindungsgemäße Energieversorgungssystem, dass das mit dem Spannungswandlungsmittel technisch sichergestellt wird, dass im Betrieb die erste Wechselspannung eingangsseitig am aktiven, rückspeisefähigen Gleichrichter kleiner ist, als die zweite Wechselspannung eingangsseitig am netzgeführten Gleichrichter. Da beide Wechselspannungen auf die Netzwechselspannung zurückzuführen sind bzw. von ihr abgeleitet werden, bleibt das Verhältnis der beiden Wechselspannungen auch bei einem Netzspannungseinbruch bzw. bei einer Netzwiederkehr der Netzwechselspannung des Wechselspannungsnetzes erhalten. Das macht das Energieversorgungssystem bzgl. Stabilität und Verfügbarkeit in vorteilhafter Weise robust.

Wenn im Kontext des Energieversorgungssystems das Wechselspannungsnetz thematisiert wird, kann dieses als einphasiges Wechselspannungsnetz oder als mehrphasiges Wechselspannungsnetz ausgebildet sein. In bevorzugter Weise ist es als dreiphasiges Drehspannungsnetz ausgebildet.

Vorteilhafte Ausgestaltungsformen des Energieversorgungssystems sind in den abhängigen Ansprüchen angegeben.

Bei einer ersten vorteilhaften Ausgestaltungsform des erfindungsgemäßen Energieversorgungssystems ist durch das Spannungswandlungsmittel die erste Wechselspannung bis zu 25% kleiner, insbesondere 15% kleiner als die zweite Wechselspannung.

Mit diesem vorteilhaften Verhältnis der zweiten Wechselspannung gegenüber der immer kleiner bleibenden ersten Wechselspannung ist an dieser Stelle der stabile Betrieb des Energieversorgungssystems ohne einen weiteren, steuerungsbedingten Eingriff in Abhängigkeit des Betriebszustandes des Energieversorgungssystems möglich.

Bei einer weiteren vorteilhaften Ausgestaltungsform des erfindungsgemäßen Energieversorgungssystems ist das Spannungswandlungsmittel eingangsseitig mit dem Wechselspannungsnetz und ausgangseitig mit dem aktiven, rückspeisefähigen Gleichrichter elektrisch verbunden und ist das Spannungswandlungsmittel derart ausgebildet, im Betrieb aus der Netzwechselspannung die erste Wechselspannung zu erzeugen, welche kleiner als die Netzwechselspannung ist.

Mittels dieses Ausführungsbeispiels ist es in vorteilhafter Weise möglich, die zweite Wechselspannung ohne eine Spannungswandlung direkt von der Netzwechselspannung elektrisch abzugreifen, wobei die zweite Wechselspannung dann identisch mit der Netzwechselspannung ist.

Bei einer weiteren vorteilhaften Ausgestaltungsform des erfindungsgemäßen Energieversorgungssystems ist das Spannungswandlungsmittel zur Erzeugung der ersten Wechselspannung aus der Netzwechselspannung ein Transformator, welcher ein Windungszahlverhältnis einer ausgangsseitig angeordneten ersten Sekundärwicklung zu einer eingangsseitig angeordneten Primärwicklung zwischen < 1 und >= 0,75, insbesondere 0,85, aufweist.

Der Transformator bildet in besonders vorteilhafter Weise eine Potentialtrennung zwischen der Netzwechselspannung und der ersten Wechselspannung. Die vorteilhafte Auslegung des Windungszahlverhältnisses des Transformators im dargestellten Bereich ist auf die Leistung bzw. den Strom des aktiven, rückspeisefähigen Gleichrichters ausgelegt, an dem eingangsseitig die erste Wechselspannung im Betrieb anliegt. Da in diesem Anwendungsbeispiel die zweite Wechselspannung möglichst identisch mit der Netzwechselspannung ist, wird durch den angegebenen Bereich des Windungszahlverhältnisses sichergestellt, dass die erste Wechselspannung kleiner ist, als die zweite Wechselspannung.

Der Transformator ist sowohl für das einphasige wie auch für das mehrphasige Wechselspannungsnetz, beim mehrphasigen Wechselspannungsnetz insbesondere für das dreiphasige Drehspannungsnetz, ausbildbar.

Bei einer weiteren vorteilhaften Ausgestaltungsform des erfindungsgemäßen Energieversorgungssystems ist das Spannungswandlungsmittel eingangsseitig mit dem Wechselspannungsnetz und ausgangseitig mit dem netzgeführten Gleichrichter elektrisch verbunden und ist das Spannungswandlungsmittel derart ausgebildet, im Betrieb aus der Netzwechselspannung die zweite Wechselspannung zu erzeugen, welche größer als die Netzwechselspannung ist.

Mittels dieses Ausführungsbeispiels ist es in vorteilhafter Weise möglich, die erste Wechselspannung ohne eine Spannungswandlung direkt elektrisch von der Netzwechselspannung abzugreifen, wobei die erste Wechselspannung dann identisch mit der Netzwechselspannung ist.

Bei einer weiteren vorteilhaften Ausgestaltungsform des erfindungsgemäßen Energieversorgungssystems ist das Spannungswandlungsmittel zur Erzeugung der zweiten Wechselspannung aus der Netzwechselspannung ein Transformator, welcher ein Windungszahlverhältnis einer ausgangsseitig angeordneten zweiten Sekundärwicklung zu einer eingangsseitige angeordneten Primärwicklung zwischen größer 1 und kleiner oder gleich 1,25, insbesondere 1,15, aufweist.

Der Transformator bildet in besonders vorteilhafter Weise eine Potentialtrennung zwischen der Netzwechselspannung und der zweiten Wechselspannung. Die vorteilhafte Auslegung des Windungszahlverhältnisses des Transformators im dargestellten Bereich ist auf die Leistung bzw. den Strom des netzgeführten Gleichrichters ausgelegt, an dem eingangsseitig die zweite Wechselspannung im Betrieb anliegt. Da in diesem Anwendungsbeispiel die erste Wechselspannung möglichst identisch mit der Netzwechselspannung ist, wird durch den angegebenen Bereich des Windungszahlverhältnisses sichergestellt, dass die erste Wechselspannung kleiner ist, als die zweite Wechselspannung.

Der Transformator ist sowohl für das einphasige wie auch für das mehrphasige Wechselspannungsnetz, beim mehrphasigen Wechselspannungsnetz insbesondere für das dreiphasige Drehspannungsnetz, ausbildbar.

Bei einer weiteren vorteilhaften Ausgestaltungsform des erfindungsgemäßen Energieversorgungssystems ist das Spannungswandlungsmittel eingangsseitig mit dem Wechselspannungsnetz elektrisch verbunden, ist das Spannungswandlungsmittel ausgangseitig durch einen ersten Ausgang mit dem aktiven, rückspeisefähigen Gleichrichter elektrisch verbunden, ist das Spannungswandlungsmittel ausgangseitig durch einen zweiten Ausgang mit dem netzgeführten Gleichrichter elektrisch verbunden ist und ist das Spannungswandlungsmittel derart ausgebildet, im Betrieb aus der Netzwechselspannung die erste und die zweite Wechselspannung zu erzeugen.

Mit diesem Ausführungsbeispiel werden die erste Wechselspannung und die zweite Wechselspannung im Betrieb durch das Spannungswandlungsmittel erzeugt, wobei das Spannungswandlungsmittel derart ausgebildet ist, dass die erste Wechselspannung kleiner ist, als die zweite Wechselspannung. Hier kann die Netzwechselspannung in ihrer Höhe sowohl ungleich zur ersten wie auch zur zweiten Wechselspannung sein.

Bei einer weiteren vorteilhaften Ausgestaltungsform des erfindungsgemäßen Energieversorgungssystems ist das Spannungswandlungsmittel zur Erzeugung der ersten Wechselspannung und der zweiten Wechselspannung aus der Netzwechselspannung ein Transformator mit einer Primärwicklung und einer ersten und einer zweiten Sekundärwicklung, ist die Primärwicklung eingangsseitig mit dem Wechselspannungsnetz elektrisch verbunden, ist die erste Sekundärwicklung ausgangsseitig mit dem aktiven, rückspeisefähigen Gleichrichter elektrisch verbunden und erzeugt im Betrieb am ersten Ausgang die erste Wechselspannung und ist die zweite Sekundärwicklung ausgangsseitig mit dem netzgeführten Gleichrichter elektrisch verbunden und erzeugt im Betrieb am zweiten Ausgang die zweite Wechselspannung.

Der Transformator bildet in besonders vorteilhafter Weise eine Potentialtrennung zwischen der Netzwechselspannung und sowohl der ersten wie auch der zweiten Wechselspannung. Das Windungszahlverhältnis der ausgangsseitig angeordneten ersten Sekundärwicklung zur eingangsseitig angeordneten Primärwicklung kann vorteilhaft zwischen < 1 und >= 0,75, insbesondere 0,85, ausgebildet sein, wobei dann das Windungszahlverhältnis der ausgangsseitig angeordneten zweiten Sekundärwicklung zur eingangsseitige angeordneten Primärwicklung zwischen größer 1 und kleiner oder gleich 1,25, insbesondere 1,15, ausgebildet sein kann. Die Auslegung der Bereiche der beiden Windungszahlverhältnisse stellt sicher, dass die erste Wechselspannung kleiner ist, als die zweite Wechselspannung.

Die vorteilhafte Auslegung des Windungszahlverhältnisses des Transformators für die ausgangsseitig angeordnete erste Sekundärwicklung zur eingangsseitig angeordneten Primärwicklung ist insbesondere auf die Leistung bzw. den Strom des aktiven, rückspeisefähigen Gleichrichters ausgelegt, an dem eingangsseitig die erste Wechselspannung im Betrieb anliegt.

Der Transformator ist sowohl für das einphasige wie auch für das mehrphasige Wechselspannungsnetz, beim mehrphasigen Wechselspannungsnetz insbesondere für das dreiphasige Drehspannungsnetz, ausbildbar.

Bei einer weiteren vorteilhaften Ausgestaltungsform des erfindungsgemäßen Energieversorgungssystems ist das Spannungswandlungsmittel zur Erzeugung der ersten Wechselspannung und der zweiten Wechselspannung aus der Netzwechselspannung ein Transformator mit einer Primärwicklung und einer dritte Sekundärwicklung, ist die Primärwicklung eingangsseitig mit dem Wechselspannungsnetz elektrisch verbunden, ist die dritte Sekundärwicklung ausgangsseitig mit dem aktiven, rückspeisefähigen Gleichrichter elektrisch verbunden und weist eine erste Wicklungsanzapfung auf, welche im Betrieb ausgangsseitig am ersten Ausgang die erste Wechselspannung erzeugt, und weist die dritte Sekundärwicklung eine zweite Wicklungsanzapfung auf, welche im Betrieb ausgangsseitig am zweiten Ausgang die zweite Wechselspannung erzeugt.

Der Transformator bildet in besonders vorteilhafter Weise eine Potentialtrennung zwischen der Netzwechselspannung und sowohl der ersten wie auch der zweiten Wechselspannung. Durch die Wicklungsanzapfung an der dritten Sekundärwicklung kann auf eine weitere Sekundärwicklung verzichtet werden.

Der Transformator ist sowohl für das einphasige wie auch für das mehrphasige Wechselspannungsnetz, beim mehrphasigen Wechselspannungsnetz insbesondere für das dreiphasige Drehspannungsnetz, ausbildbar.

Bei einer weiteren vorteilhaften Ausgestaltungsform des erfindungsgemäßen Energieversorgungssystems weist der aktive, rückspeisefähige Gleichrichter eine erste elektrische Brückenschaltung auf, welche mit Leistungshalbleitern, insbesondere IGBT-Leistungshalbleitermodulen mit antiparalleler Freilaufdiode, für einen vollgesteuerten, rückspeisefähigen Betrieb ausgebildet ist und weist der netzgeführte Gleichrichter eine zweite elektrische Brückenschaltung auf, welche mit Leistungshalbleitern, insbesondere Leistungsdioden, für einen ungesteuerten Betrieb ausgebildet ist, oder welche mit Leistungshalbleitern, insbesondere einer Kombination von Leistungsdioden und Leistungsthyristoren, für einen halbgesteuerten Betrieb ausgebildet ist, oder welche mit Leistungshalbleitern, insbesondere Leistungsthyristoren, für einen vollgesteuerten Betrieb ausgebildet ist.

Bekannte Ansteuerverfahren für eine Ansteuerung von IGBT-Leistungshalbleitermodulen mit antiparalleler Freilaufdiode in der ersten elektrischen Brückenschaltungen ermöglichen dem aktiven, rückspeisefähigen Gleichrichter, neben der Netzeinspeisung von Wirkleistung in das Gleichspannungsnetz, in vorteilhafter Weise die Netzrückspeisung von Wirkleistung in das Wechselspannungsnetz, die Erzeugung von Grundschwingungsblindleistung zur Blindleistungskompensation im Wechselspannungsnetz und die Erzeugung von Oberschwingungsleistung für die Oberschwingungskompensation im Wechselspannungsnetz.

Bekannte Ansteuerverfahren für eine Ansteuerung von Leistungsthyristoren in der zweiten Brückenschaltung im halbgesteuerten oder vollgesteuerten Betrieb ermöglichen beim netzgeführten Gleichrichter unter Verwendung eines Zündwinkel > 0 beispielsweise eine Strombegrenzung durch Spannungsreduktion während der Netzeinspeisung von elektrischer Energie in das Gleichspannungsnetz.

Im Gegensatz dazu ist für den ungesteuerten Betrieb mittels Leistungsdioden in der zweiten Brückenschaltung des netzgeführten Gleichrichters während der Netzeinspeisung von elektrischer Energie in das Gleichspannungsnetz eine eigene Strombegrenzung mangels Ansteuermöglichkeiten der Leistungsdioden unmöglich. In diesem Fall kann beispielsweise ein Schaltelement eingangsseitig am netzgeführten Gleichrichter dessen Stromführung begrenzen und damit eine Zerstörung der Leistungsdioden verhindern.

Bei einer weiteren vorteilhaften Ausgestaltungsform des erfindungsgemäßen Energieversorgungssystems weist das Energieversorgungssystem eine Gleichspannungserfassung auf, welche am Gleichspannungsnetz zur Erfassung der Netzgleichspannung vorgesehen ist, eine erste Wechselspannungserfassung auf, welche eingangsseitig am aktiven, rückspeisefähigen Gleichrichter zur Erfassung der ersten Wechselspannung vorgesehen ist und/oder eine zweite Wechselspannungserfassung auf, welche eingangsseitig am netzgeführten Gleichrichter zur Erfassung der zweiten Wechselspannung vorgesehen ist.

Die jeweilige Erfassung der beiden Wechselspannungen wie auch die Erfassung der Netzgleichspannung ist nicht zwingend an eine Messung durch Hardware-Messmittel gebunden. So kann beispielsweise die erste Wechselspannungserfassung als Teil einer Softwarefunktion der Ansteuerung im aktiven, netzgeführten Gleichrichter und die zweite Wechselspannungserfassung als Teil einer weiteren Softwarefunktion der, falls vorhanden, Ansteuerung im netzgeführten Gleichrichter ausgebildet sein. Dabei kann die jeweilige Wechselspannung aus systembedingt bekannten, gemessenen oder berechneten anderweitigen elektrischen Kenngrößen ermittelt werden.

Bei einer weiteren vorteilhaften Ausgestaltungsform des erfindungsgemäßen Energieversorgungssystems weist das Energieversorgungssystem eine übergreifende Steuereinheit, eine ersten Steuereinheit des aktiven, rückspeisefähigen Gleichrichters und, sofern der netzgeführte Gleichrichter steuerbar ist, eine zweite Steuereinheit des netzgeführten Gleichrichters auf, wobei die übergreifende Steuereinheit zumindest mit der ersten Steuereinheit mittels einer Datenleitung zur Datenübermittlung verbindbar ist.

Während die erste Steuereinheit insbesondere für die Ansteuerung der Leistungshalbleiter der ersten Brückenschaltung des aktiven, rückspeisefähigen Gleichrichters ausgebildet ist, kann die zweite Steuereinheit insbesondere für die Ansteuerung der zweiten Brückenschaltung des netzgeführten Gleichrichters vorgesehen sein, sofern dieser für den halbesteuerten oder vollgesteuerten Betrieb seiner zweiten Brückenschaltung ausgelegt ist.

Die übergreifende Steuereinheit des Energieversorgungssystems kann insbesondere für die erste Steuereinheit des aktiven, rückspeisefähigen Gleichrichters mittels der Datenleitung Daten übermitteln, welche im Betrieb beispielsweise Sollwerte für die Blindleistungskompensation und/oder die Oberschwingungskompensation und/oder für die Ein- bzw. Rückspeisung von elektrischer Energie enthalten.

Für die Lösung der Aufgabe wird ebenfalls ein Verfahren zur Energieversorgung mit einem erfindungsgemäßen Energieversorgungssystem vorgeschlagen, wobei im Betrieb die erste Wechselspannung kleiner ist, als die zweite Wechselspannung, wobei mittels des aktiven, rückspeisefähigen Gleichrichters eine von der übergeordneten Steuereinheit über die Signalleitung an die erste Steuereinheit des aktiven, rückspeisefähigen Gleichrichters vorgegebene Grundschwingungsblindleistung in das Wechselspannungsnetz eingespeist werden kann und/oder wobei mittels des aktiven, rückspeisefähigen Gleichrichters eine von der übergeordneten Steuereinheit über die Signalleitung an die erste Steuereinheit des aktiven, rückspeisefähigen Gleichrichters vorgegebene Oberschwingungsleistung in das Wechselspannungsnetz eingespeist werden kann.

Der aktive, rückspeisefähige Gleichrichter des Energieversorgungssystems kann mittels des Verfahrens in vorteilhafter Weise die vom netzgeführten Gleichrichter erzeugten, niederfrequenten stromharmonischen Oberschwingungen der Netzfrequenz im Wechselspannungsnetz kompensieren. Ebenfalls in vorteilhafter Weise kann mittels des Verfahrens Blindleistung im Wechselspannungsnetz kompensiert werden.

Bei einer ersten vorteilhaften Ausgestaltungsform des erfindungsgemäßen Verfahrens wird im Betrieb die erste Wechselspannung durch die erste Wechselspannungserfassung erfasst und wird aus der ersten Wechselspannung die zweite Wechselspannung durch ein vorgegebenes Übersetzungsverhältnis des Spannungswandlungsmittels, insbesondere des Transformators, ermittelt oder wird die zweite Wechselspannung durch die zweite Wechselspannungserfassung erfasst, wird im Betrieb die Netzgleichspannung mittels der Gleichspannungserfassung erfasst, wird im Betrieb mittels des netzgeführten Gleichrichters eine erste Wirkleistung aus dem Wechselspannungsnetz in das Gleichspannungsnetz einspeist, solang der Scheitelwert der Spannungsamplitude zwischen zwei der Phasen der zweiten Wechselspannung größer ist, als die Netzgleichspannung, und kann im Betrieb mittels des aktiven, rückspeisefähigen Gleichrichters eine zweite Wirkleistung aus dem Wechselspannungsnetz in das Gleichspannungsnetz zusätzlich zum netzgeführte Gleichrichter eingespeist werden, wenn die ersten Steuereinheit des aktiven, rückspeisefähigen Gleichrichters ermittelt, dass der Scheitelwert der Spannungsamplitude zwischen zwei der Phasen der zweiten Wechselspannung um einen ersten Schwellenwertbereich größer ist, als die Netzgleichspannung.

Der Vergleich des Scheitelwerts der Spannungsamplitude zwischen zwei der Phasen der zweiten Wechselspannung mit der Netzgleichspannung in der ersten Steuereinheit des aktive, rückspeisungsfähige Gleichrichters kann mittels einer Spannungs-Leistungskennlinie durchgeführt werden, welche beispielsweise in einem Speichermedium der ersten Steuereinheit hinterlegt ist.

Alternativ kann die Spannungs-Leistungskennlinie auch als Funktion eines Aussteuergrades des aktiven, rückspeisungsfähigen Gleichrichters ausgeführt sein. Der Aussteuergrad ergibt sich aus dem Verhältnis zwischen dem Scheitelwert der Spannungsamplitude zwischen zwei der Phasen der ersten Wechselspannung eingangsseitig des aktiven, rückspeisungsfähigen Gleichrichters und der Netzgleichspannung im Gleichspannungsnetz.

Bei einer vorteilhaften Ausgestaltungsform des erfindungsgemäßen Verfahrens wird im Betrieb die erste Wechselspannung durch die erste Wechselspannungserfassung erfasst und wird aus der ersten Wechselspannung die zweite Wechselspannung durch ein vorgegebenes Übersetzungsverhältnis des Spannungswandlungsmittels, insbesondere des Transformators, ermittelt oder wird die zweite Wechselspannung durch die zweite Wechselspannungserfassung erfasst, wird im Betrieb die Netzgleichspannung mittels der Gleichspannungserfassung erfasst und kann im Betrieb eine dritte Wirkleistung aus dem Gleichspannungsnetz in das Wechselspannungsnetz rückgespeist werden, wenn die erste Steuereinheit des aktiven, rückspeisefähigen Gleichrichters ermittelt, dass die Netzgleichspannung um einen zweiten Schwellwertbereich größer ist als der Scheitelwert der Spannungsamplitude zwischen zwei der Phasen der zweiten Wechselspannung.

Der Vergleich des Scheitelwerts der Spannungsamplitude zwischen zwei der Phasen der zweiten Wechselspannung mit der Netzgleichspannung in der ersten Steuereinheit des aktive, rückspeisungsfähige Gleichrichters kann auch in diesem Ausführungsbeispiel mittels einer Spannungs-Leistungskennlinie durchgeführt werden, welche beispielsweise in einem Speichermedium der ersten Steuereinheit hinterlegt ist.

Alternativ kann die Spannungs-Leistungskennlinie auch hier im Ausführungsbeispiel als Funktion eines Aussteuergrades des aktiven, rückspeisungsfähigen Gleichrichters ausgeführt sein. Der Aussteuergrad ergibt sich aus dem Verhältnis zwischen dem Scheitelwert der Spannungsamplitude zwischen zwei der Phasen der ersten Wechselspannung eingangsseitig des aktiven, rückspeisungsfähigen Gleichrichters und der Netzgleichspannung im Gleichspannungsnetz.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
FIG 1 eine schematische Darstellung eines Ausführungsbeispiels des erfindungsgemäßen Energieversorgungssystems,
FIG 2 eine erste schematische Detaildarstellung eines Ausführungsbeispiels eines Spannungswandlungsmittels für das erfindungsgemäße Energieversorgungssystem nach FIG 1,
FIG 3 eine zweite schematische Detaildarstellung eines weiteren Ausführungsbeispiels eines Spannungswandlungsmittels für das erfindungsgemäße Energieversorgungssystem nach FIG 1,
FIG 4 eine dritte schematische Detaildarstellung eines weiteren Ausführungsbeispiels eines Spannungswandlungsmittels für das erfindungsgemäße Energieversorgungssystem nach FIG 1,
FIG 5 eine schematische Diagrammdarstellung eines Ausführungsbeispiels einer Spannungs-Leistungskennlinie zum Betrieb eines aktiven, rückspeisefähigen Gleichrichters des erfindungsgemäßen Energieversorgungssystems und
FIG 6 eine schematische Struktogrammdarstellung des erfindungsgemäßen Verfahrens zur Energieversorgung mit dem erfindungsgemäßen Energieversorgungssystem.

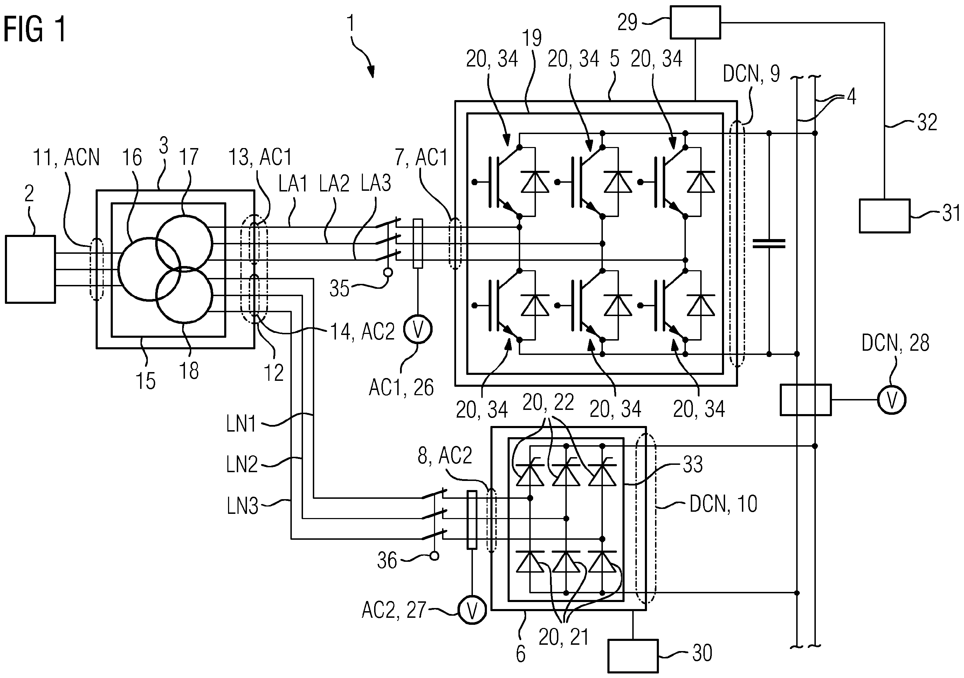

FIG 1 zeigt eine schematische Darstellung eines Ausführungsbeispiels des erfindungsgemäßen Energieversorgungssystems 1 mit einem ein Spannungswandlungsmittel 3, welches eingangsseitig 11 mit einem Wechselspannungsnetz 2 elektrisch verbunden ist. Das Wechselspannungsnetz 2 ist im Anwendungsbeispiel als dreiphasiges Drehstromnetz ausgeführt. Demnach ist hier eine am Wechselspannungsnetz 2 im Betrieb anliegende Netzwechselspannung ACN als Netzdrehspannung ausgeführt. Im Folgenden werden jedoch weiter die Begriffe Wechselspannungsnetz 2 und Netzwechselspannung ACN verwendet.

Ausgangsseitig 12 ist das Spannungswandlungsmittel 3 elektrisch über einen ersten Ausgang 13 eingangsseitig 7 mit einem aktiven, rückspeisefähigen Gleichrichter 5 verbunden, wobei ausgangsseitig 12 des ersten Ausgangs 13 und eingangsseitig 7 des aktiven, rückspeisefähigen Gleichrichters 5 im Betrieb eine erste Wechselspannung AC1 anliegt. Ebenso ausgangsseitig 12 ist das Spannungswandlungsmittel 3 elektrisch über einen zweiten Ausgang 14 eingangsseitig 8 mit dem netzgeführten Gleichrichter 6 verbunden, wobei ausgangsseitig 12 des zweiten Ausgangs 14 und eingangsseitig 8 des netzgeführten Gleichrichter 6 im Betrieb eine zweite Wechselspannung AC2 anliegt. Beide Wechselspannungen AC1,AC2 sind im Ausführungsbeispiel als Drehspannungen ausgeführt, im Folgenden werden dafür jedoch weiterhin die Begriffe erste Wechselspannung AC1 und zweite Wechselspannung AC2 verwendet.

Ferner ist das Spannungswandlungsmittel 3 hier in FIG 1 mit einem Transformator 15 ausgebildet (hier beispielhaft als dreiphasiger Transformator), welcher eingangsseitig 11 mittels seiner Primärwicklung 16 mit dem Wechselspannungsnetz 2 elektrisch verbunden ist.

Der Transformator 15 weist eine erste Sekundärwicklung 17 mit der im Betrieb anliegenden ersten Wechselspannung AC1 auf, wobei die erste Sekundärwicklung 17 ausgangsseitig 12 über den ersten Ausgang 13 eingangsseitig 7 mit dem aktiven, rückspeisefähigen Gleichrichter 5 elektrisch verbunden ist. Diese elektrische Verbindung ist hier beispielhaft als eine dreiphasige elektrische Wechselspannungsverbindung ausgebildet, welche ein erstes Schaltelement 35 und eine erste Wechselspannungserfassung 26 der ersten Wechselspannung AC1 an einer ersten Phase LA1, einer zweiten Phase LA2 und einer dritten Phase LA3 der dreiphasigen elektrischen Wechselspannungsverbindung umfasst.

Weiterhin weist der Transformator 15 eine zweite Sekundärwicklung 18 mit der im Betrieb anliegenden zweiten Wechselspannung AC2 auf, wobei die zweite Sekundärwicklung 18 ausgangsseitig 12 über den zweiten Ausgang 14 eingangsseitig 8 mit dem netzgeführten Gleichrichter 6 elektrisch verbunden ist. Diese elektrische Verbindung ist hier beispielhaft als eine weitere dreiphasige elektrische Wechselspannungsverbindung ausgebildet, welche ein zweites Schaltelement 36 und eine zweite Wechselspannungserfassung 27 der zweiten Wechselspannung AC2 an einer ersten Phase LN1, einer zweiten Phase LN2 und einer dritten Phase LN3 der weiteren dreiphasigen elektrischen Wechselspannungsverbindung umfasst. Ausgangsseitig 9 ist der aktive, rückspeisefähige Gleichrichter 5 mit einem Gleichspannungsnetz 4 verbunden, an welchem im Betrieb eine Netzgleichspannung DCN anliegt. Ferner weist der aktive, rückspeisefähige Gleichrichter 5 eine erste elektrische Brückenschaltung 19 auf, welche Leistungshalbleiter 20 in Form von IGBT-Leistungshalbleitermodulen 34 umfasst. Die erste elektrische Brückenschaltung 19 ist eingangsseitig 7 am aktiven, rückspeisefähigen Gleichrichter 5 derart elektrisch verbunden, dass im Betrieb die erste Wechselspannung AC1 anliegt und ist ausgangsseitig 9 derart elektrisch verbunden, dass im Betrieb die Netzgleichspannung DCN anliegt.

Ausgangsseitig 10 ist der netzgeführte Gleichrichter 6 mit dem Gleichspannungsnetz 4 verbunden, an welchem im Betrieb die Netzgleichspannung DCN anliegt. Ferner weist der netzgeführte Gleichrichter 6 eine zweite elektrische Brückenschaltung 33 auf, welche Leistungshalbleiter 20 aus einer Kombination von Leistungsdioden 21 und Leistungsthyristoren 22 umfasst. Die zweite elektrische Brückenschaltung 33 ist eingangsseitig 8 am netzgeführten Gleichrichter 6 derart elektrisch verbunden, dass im Betrieb die zweite Wechselspannung AC2 anliegt und ist ausgangsseitig 10 derart elektrisch verbunden, dass im Betrieb die Netzgleichspannung DCN anliegt.

Der aktive, rückspeisefähige Gleichrichter 5 umfasst eine erste Steuereinheit 29, welche die Leistungshalbleiter 20 der ersten Brückenschaltung 19 ansteuert. Darüber hinaus ist die erste Steuereinheit 29 mittels einer Datenleitung 32 mit einer übergeordneten Steuereinheit 31 verbunden. Diese übergeordnete Steuereinheit 31 übermittelt beispielsweise Daten an die erste Steuereinheit 29 wie Sollwerte für eine Blindleistungskompensation oder für eine Kompensation von Oberschwingungen im Wechselspannungsnetz ACN.

Der netzgeführte Gleichrichter 6 umfasst eine zweite Steuereinheit 30, welche die Leistungshalbleiter 20 der zweiten Brückenschaltung 33 ansteuert, soweit diese Leistungshalbleiter 20 steuerbar sind, was im Ausführungsbeispiel für die Leistungsthyristoren 21 zutrifft.

Im Gleichspannungsnetz 4 ist eine Gleichspannungserfassung 28 angeordnet, welche die Netzgleichspannung DCN des Gleichspannungsnetzes 4 erfasst.

Mittel des ersten Schaltelements 35 kann der aktive, rückspeisefähige Gleichrichter 5 eingangsseitig 7 vom Wechselspannungsnetz 2 elektrisch getrennt werden und mittels des zweiten Schaltelements 36 kann der netzgeführte Gleichrichter 6 eingangsseitig 8 elektrisch vom Wechselspannungsnetz 2 getrennt werden.

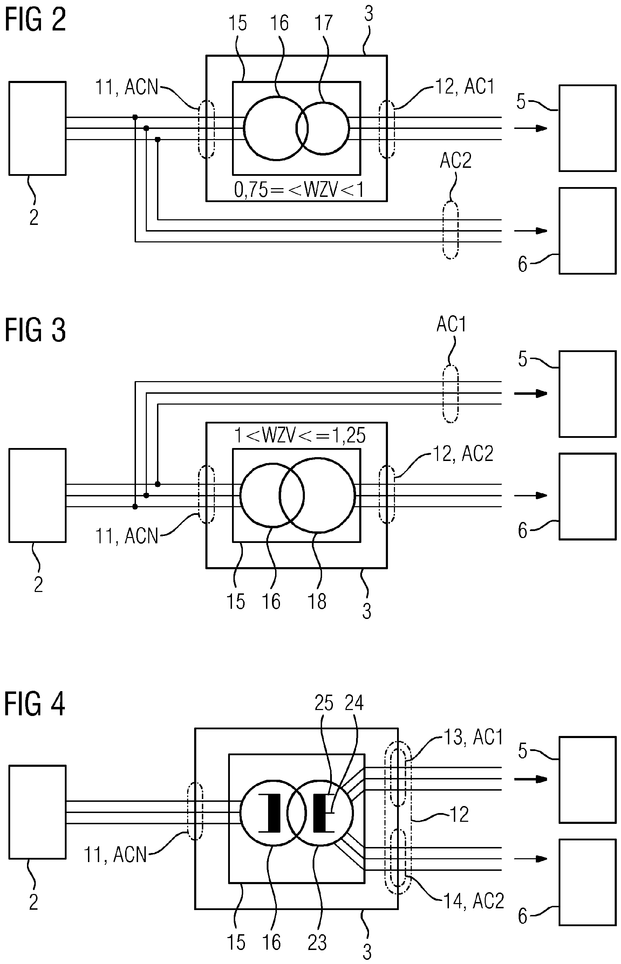

FIG 2 zeigt eine erste schematische Detaildarstellung eines Ausführungsbeispiels eines Spannungswandlungsmittels 3 für das erfindungsgemäße Energieversorgungssystem 1 nach FIG 1.

Das Spannungswandlungsmittel 3 ist eingangsseitig 11 mit dem Wechselspannungsnetz 2 elektrisch verbunden. Im Betrieb liegt am Wechselspannungsnetz 2 die Netzwechselspannung ACN an.

Ausgangsseitig 12 ist das Spannungswandlungsmittel 3 vergleichbar der FIG 1 mit dem aktiven, rückspeisefähigen Gleichrichter 5 elektrisch verbunden, worauf in FIG 2 nur indirekt mittels eines Pfeils in Richtung des aktiven, rückspeisefähigen Gleichrichters 5 verwiesen wird. Es liegt ausgangsseitig 12 des Spannungswandlungsmittels 3 im Betrieb die erste Wechselspannung AC1 an.

Der netzgeführte Gleichrichter 6, an welchem im Betrieb die zweite Wechselspannung AC2 anliegt, ist elektrisch direkt mit dem Wechselspannungsnetz ACN verbunden, worauf in FIG 2 nur indirekt mittels eines Pfeils in Richtung des netzgeführten Gleichrichters 6 verwiesen wird. Demnach entspricht im Betrieb die zweite Wechselspannung AC2 hier der Netzwechselspannung ACN.

Das Spannungswandlungsmittel 3 umfasst in FIG 2 einen Transformator 15 mit einer Primärwicklung 16 und einer ersten Sekundärwicklung 17. Das Windungszahlverhältnis WZV von Primärwicklung 16 zu erster Sekundärwicklung 17 liegt in einem Bereich von >= 0,75 bis < 1. Die Primärwicklung 16 ist eingangsseitig 11 des Spannungswandlungsmittels 3 mit dem Wechselspannungsnetz 2 elektrisch verbunden, wobei im Betrieb die Netzwechselspannung ACN anliegt. Die erste Sekundärwicklung 17 ist ausgangsseitig 12 des Spannungswandlungsmittels 3 mit dem aktiven, rückspeisefähigen Gleichrichter 5 elektrisch verbunden, wobei im Betrieb die erste Wechselspannung AC1 anliegt.

FIG 3 zeigt eine zweite schematische Detaildarstellung eines weiteren Ausführungsbeispiels eines Spannungswandlungsmittels 3 für das erfindungsgemäße Energieversorgungssystem 1 nach FIG 1.

Das Spannungswandlungsmittel 3 ist eingangsseitig 11 mit dem Wechselspannungsnetz 2 elektrisch verbunden. Im Betrieb liegt am Wechselspannungsnetz 2 die Netzwechselspannung ACN an.

Ausgangsseitig 12 ist das Spannungswandlungsmittel 3 vergleichbar der FIG 1 mit dem netzgeführten Gleichrichter 6 elektrisch verbunden, worauf in FIG 3 nur indirekt mittels eines Pfeils in Richtung des netzgeführten Gleichrichters 6 verwiesen wird. Es liegt ausgangsseitig 12 des Spannungswandlungsmittels 3 im Betrieb die zweite Wechselspannung AC2 an.

Der aktive, rückspeisefähige Gleichrichter 5, an welchem im Betreib die erste Wechselspannung AC1 anliegt, ist elektrisch direkt mit dem Wechselspannungsnetz ACN verbunden, worauf in FIG 3 nur indirekt mittels eines Pfeils in Richtung des aktiven, rückspeisefähigen Gleichrichters 5 verwiesen wird. Demnach entspricht im Betrieb die erste Wechselspannung AC1 hier der Netzwechselspannung ACN.

Das Spannungswandlungsmittel 3 umfasst in FIG 3 einen Transformator 15 mit einer Primärwicklung 16 und einer zweiten Sekundärwicklung 18. Das Windungszahlverhältnis WZV von Primärwicklung 16 zu zweiter Sekundärwicklung 18 liegt in einem Bereich von > 1 bis <= 1,25. Die Primärwicklung 16 ist eingangsseitig 11 des Spannungswandlungsmittels 3 mit dem Wechselspannungsnetz 2 elektrisch verbunden, wobei im Betrieb die Netzwechselspannung ACN anliegt. Die zweite Sekundärwicklung 18 ist ausgangsseitig 12 des Spannungswandlungsmittels 3 mit dem netzgeführten Gleichrichter 6 elektrisch verbunden, wobei im Betrieb die zweite Wechselspannung AC2 anliegt.

FIG 4 zeigt eine dritte schematische Detaildarstellung eines weiteren Ausführungsbeispiels eines Spannungswandlungsmittels 3 für das erfindungsgemäße Energieversorgungssystem 1 nach FIG 1.

Das Spannungswandlungsmittel 3 ist eingangsseitig 11 mit dem Wechselspannungsnetz 2 elektrisch verbunden. Im Betrieb liegt am Wechselspannungsnetz 2 die Netzwechselspannung ACN an.

Ausgangsseitig 12 ist das Spannungswandlungsmittel 3 vergleichbar der FIG 1 mit dem aktiven, rückspeisefähigen Gleichrichter 5 über den ersten Ausgang 13 elektrisch verbunden, worauf in FIG 4 nur indirekt mittels eines Pfeils in Richtung des aktiven, rückspeisefähigen Gleichrichters 5 verwiesen wird. Es liegt ausgangsseitig 12 des Spannungswandlungsmittels 3 am ersten Ausgang 13 im Betreib die erste Wechselspannung AC1 an.

Ebenfalls ausgangsseitig 12 ist das Spannungswandlungsmittel 3 vergleichbar der FIG 1 mit dem netzgeführten Gleichrichter 6 über den zweiten Ausgang 14 elektrisch verbunden, worauf in FIG 4 nur indirekt mittels eines Pfeils in Richtung des netzgeführten Gleichrichters 6 verwiesen wird. Es liegt ausgangsseitig 12 des Spannungswandlungsmittels 3 am zweiten Ausgang 14 im Betrieb die zweite Wechselspannung AC2 an.

Das Spannungswandlungsmittel 3 umfasst in FIG 4 einen Transformator 15 mit einer Primärwicklung 16 und einer dritten Sekundärwicklung 23, wobei die dritte Sekundärwicklung 23 eine erste Wicklungsanzapfung 24 und eine zweite Wicklungsanzapfung 25 aufweist. Die Primärwicklung 16 ist eingangsseitig 11 des Spannungswandlungsmittels 3 mit dem Wechselspannungsnetz 2 elektrisch verbunden, wobei im Betrieb die Netzwechselspannung ACN anliegt.

Die erste Wicklungsanzapfung 24 ist ausgangsseitig 12 des Spannungswandlungsmittels 3 über den ersten Ausgang 13 (in FIG 4 nicht im Detail gezeigt) mit dem aktiven, rückspeisefähigen Gleichrichter 5 elektrisch verbunden, wobei im Betrieb die erste Wechselspannung AC1 anliegt.

Die zweite Wicklungsanzapfung 25 ist ausgangsseitig 12 des Spannungswandlungsmittels 3 über den zweiten Ausgang 14 (in FIG 4 nicht im Detail gezeigt) mit dem netzgeführten Gleichrichter 6 elektrisch verbunden, wobei im Betrieb die zweite Wechselspannung AC2 anliegt.

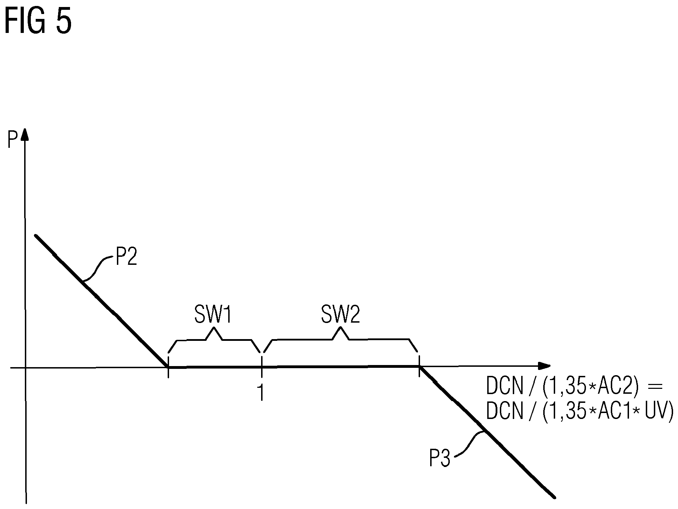

FIG 5 zeigt eine schematische Diagrammdarstellung eines Ausführungsbeispiels einer Spannungs-Leistungskennlinie zum Betrieb eines aktiven, rückspeisefähigen Gleichrichters 5 des erfindungsgemäßen Energieversorgungssystems 1 nach FIG 1.

Der aktive, rückspeisefähige Gleichrichter 5 ist als Teil des erfindungsgemäßen Energieversorgungssystems 1 und mittels eines erfindungsgemäßen Verfahrens zur Energieversorgung ausgebildet, sowohl elektrische Energie aus dem Wechselspannungsnetz 2 in das Gleichspannungsnetz 4 einzuspeisen, wie auch elektrische Energie aus dem Gleichspannungsnetz 4 in das Wechselspannungsnetz 2 zurückzuspeisen.

Dazu erfolgt ein Vergleich des Scheitelwerts der Spannungsamplitude zwischen zwei der Phasen LN1,LN2,LN3 der zweiten Wechselspannung AC2 (1,35*AC2) mit der Netzgleichspannung DCN in der ersten Steuereinheit 29 des aktiven, rückspeisungsfähigen Gleichrichters 5, was mittels einer Spannungs-Leistungskennlinie durchgeführt werden kann, wie sie in FIG 5 gezeigt wird.

Der Vergleich kann auch mittels Scheitelwerts der Spannungsamplitude zwischen zwei der Phasen LA1,LA2,LA3 der ersten Wechselspannung AC1 erfolgen, wobei das Übersetzungsverhältnis UV von erster und zweiter Wechselspannung AC1,AC2 mit berücksichtigt werden muss (1,35*A1*UV). Das Übersetzungsverhältnis UV wird durch die Auslegung das Spannungswandlungsmittel 3, im Allgemeinen durch die Auslegung des Transformators 15, vorgegeben und ist demnach bekannt.

Wird als Ergebnis des Vergleichs anhand der Spannungs-Leistungskennlinie nach FIG 5 festgestellt, dass ein Wert kleiner 1 vorliegt, und ist dieser Wert dazu noch kleiner als ein erster Schwellwertbereich SW1, speist der aktive, rückspeisefähige Gleichrichter 5 eine zweite Wirkleistung P2 vom Wechselspannungsnetz 2 in das Gleichspannungsnetz 4 ein.

Wird als Ergebnis des Vergleichs anhand der Spannungs-Leistungskennlinie nach FIG 5 festgestellt, dass der Wert größer 1 vorliegt, und ist dieser Wert dazu noch größer als ein zweiter Schwellwertbereich SW2, speist der aktive, rückspeisefähige Gleichrichter 5 eine dritte Wirkleistung P3 vom Gleichspannungsnetz 4 in das Wechselspannungsnetz 2 zurück.

Wird als Ergebnis des Vergleichs anhand der Spannungs-Leistungskennlinie nach FIG 5 festgestellt, dass der Wert in einem der beiden Schwellwertbereiche SW1,SW2 liegt, wird weder eine Wirkleistung P in das Gleichspannungsnetz 4 eingespeist, noch eine Wirkleistung P in das Wechselspannungsnetz 2 zurückgespeist. Allerdings ist es in diesem Fall durchaus möglich, mittels des aktiven, rückspeisefähigen Gleichrichters 5 sowohl Grundschwingungsblindleistung zur Blindleistungskompensation wie auch Oberschwingungsleistung zur Oberschwingungskompensation für das Wechselspannungsnetz 2 zu erzeugen.

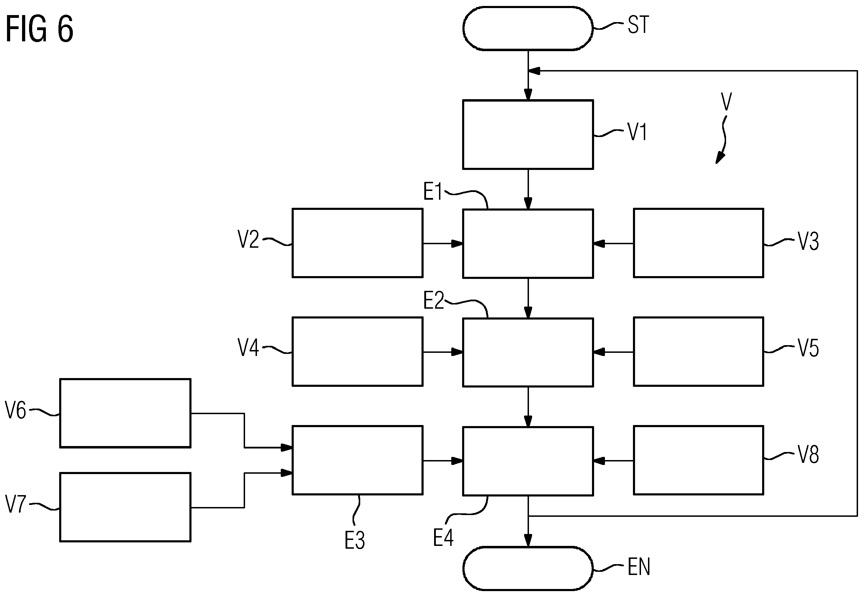

FIG 6 zeigt eine schematische Struktogrammdarstellung des erfindungsgemäßen Verfahrens V zur Energieversorgung mit dem erfindungsgemäßen Energieversorgungssystem 1 nach FIG 1.

Nach einem Start ST des Verfahrens V, welcher beispielsweise durch die übergeordnete Steuereinheit 31 ausgelöst kann, ist die im ersten Verfahrensschritts V1 festgelegte Bedingung, dass die erste Wechselspannung AC1 kleiner ist, als die zweite Wechselspannung AC2. Ist diese Bedingung nicht erfüllt, kann das Verfahren V nicht weiter durchgeführt werden und wird beendet.

Der zweite Verfahrensschritt V2 bildet eine erste Option, dass mittels des aktiven, rückspeisefähigen Gleichrichters 5 eine von der übergeordneten Steuereinheit 31 über die Signalleitung 32 an die erste Steuereinheit 29 des aktiven, rückspeisefähigen Gleichrichters 5 vorgegebene Grundschwingungsblindleistung in das Wechselspannungsnetz ACN eingespeist werden kann.

Der dritte Verfahrensschritt V3 bildet eine zweite Option, dass mittels des aktiven, rückspeisefähigen Gleichrichters 5 eine von der übergeordneten Steuereinheit 31 über die Signalleitung 32 an die erste Steuereinheit 29 des aktiven, rückspeisefähigen Gleichrichters 5 vorgegebene Oberschwingungsleistung in das Wechselspannungsnetz ACN eingespeist werden kann.

Anhand einer ersten Entscheidung E1 wird festgelegt, ob die erste Option oder die zweite Option, beide der Optionen oder keine der Optionen durchgeführt werden. Der aktive, rückspeisefähige Gleichrichter 5 des Energieversorgungssystems 1 führt die gewählte Option oder die gewählten Optionen aus.

Der vierte Verfahrensschritt V4 bildet eine dritte Option, dass die erste Wechselspannung AC1 durch die erste Wechselspannungserfassung 26 erfasst wird und aus der ersten Wechselspannung AC1 die zweite Wechselspannung AC2 durch ein vorgegebenes Übersetzungsverhältnis UV des Spannungswandlungsmittels 3, insbesondere des Transformators 15, ermittelt wird und die Netzgleichspannung DCN mittels der Gleichspannungserfassung 28 erfasst wird.

Der fünfte Verfahrensschritt V5 bildet eine vierte Option, dass die zweite Wechselspannung AC2 durch die zweite Wechselspannungserfassung 27 erfasst wird und die Netzgleichspannung DCN mittels der Gleichspannungserfassung 28 erfasst wird.

Anhand einer zweiten Entscheidung E2 wird gelegt, ob die dritte Option oder die vierte Option durchgeführt wird. Der aktive, rückspeisefähige Gleichrichter 5 des Energieversorgungssystems 1 führt die gewählte Option aus.

Der sechste Verfahrensschritt V6 bildet eine fünfte Option, dass der aktive, rückspeisefähige Gleichrichter 5 eine zweite Wirkleistung P2 aus dem Wechselspannungsnetz 2 in das Gleichspannungsnetz 4 zusätzlich zum netzgeführte Gleichrichter 6 einspeisen kann, wenn von der ersten Steuereinheit 29 des aktiven, rückspeisefähigen Gleichrichters 5 ermittelt wird, dass der Scheitelwert der Spannungsamplitude zwischen zwei der Phasen LN1,LN2,LN3 der zweiten Wechselspannung AC2 um einen ersten Schwellwertbereich SW1 größer ist, als die Netzgleichspannung DCN.

Der siebente Verfahrensschritt V7 bildet eine sechste Option, dass eine dritte Wirkleistung P3 aus dem Gleichspannungsnetz 4 in das Wechselspannungsnetz 2 rückgespeist werden kann, wenn die erste Steuereinheit 29 des aktiven, rückspeisefähigen Gleichrichters 5 ermittelt, dass die Netzgleichspannung DCN um einen zweiten Schwellwertbereich SW2 größer ist, als der Scheitelwert der Spannungsamplitude zwischen zwei der Phasen LN1,LN2,LN3 der zweiten Wechselspannung AC2.

Anhand einer dritten Entscheidung E3 wird festgelegt, ob die fünfte Option oder die sechste Option durchgeführt wird.

Der achte Verfahrensschritt V8 bildet eine siebent Option, dass der netzgeführte Gleichrichter 6 eine erste Wirkleistung aus dem Wechselspannungsnetz 2 in das Gleichspannungsnetz 4 einspeist, solang der Scheitelwert der Spannungsamplitude zwischen zwei der Phasen LN1,LN2,LN3 der zweiten Wechselspannung AC2 größer ist, als die Netzgleichspannung DCN.

Anhand einer vierten Entscheidung E4 wird festgestellt, ob die siebente Option allein oder mit dem Ergebnis der dritten Entscheidung durchgeführt wird. Der aktive, rückspeisefähige Gleichrichter 5 und/oder der netzgeführte Gleichrichter 6 des Energieversorgungssystems 1 führen die gewählten Optionen aus. Dabei ist zu berücksichtigen, dass, wenn eine Rückspeisung der elektrischen Energie vom Gleichspannungsnetz 4 in das Wechselspannungsnetz 2 mittels des aktiven, rückspeisefähigen Gleichrichter 5 zurückgespeist werden soll (sechste Option), in der Regel verhindert werden muss, dass der netzgeführte Gleichrichter 6 gleichzeitig elektrische Energie vom Wechselspannungsnetz 2 in das Gleichspannungsnetz 4 einspeist (siebente Option).

Das Verfahren läuft im Allgemeinen iterativ ab, solang das Energieversorgungssystem 1 im Betrieb ist. Das Ende EN des Verfahrensablaufs des Verfahrens V kann beispielsweise durch die übergeordnete Steuereinheit 31 ausgelöst werden.

Das Verfahren V ist in eine der Steuereinheiten 29,30,31 implementierbar und von dieser durchführbar. Vorzugsweise wird es jedoch in die übergeordneten Steuereinheit 31 implementiert und von ihr durchgeführt.

## Patentansprüche

1. Energieversorgungssystem (1) zur Netzeinspeisung und Netzrückspeisung, aufweisend
- ein Spannungswandlungsmittel (3),
- einen aktiven, rückspeisefähigen Gleichrichter (5) und
- einen netzgeführten Gleichrichter (6),
wobei
- das Spannungswandlungsmittel (3) mit einem Wechselspannungsnetz (2), an welchem im Betrieb eine Netzwechselspannung (ACN) anliegt, und mit dem aktiven, rückspeisefähigen Gleichrichter (5) und/oder mit dem netzgeführten Gleichrichter (6) elektrisch verbunden ist,
- der aktive, rückspeisefähige Gleichrichter (5) eingangsseitig (7) mit dem Wechselspannungsnetz (2) derart elektrisch verbunden ist, dass im Betrieb eine erste Wechselspannung (AC1) anliegt,
- der netzgeführte Gleichrichter (6) eingangsseitig (8) derart mit dem Wechselspannungsnetz (2) elektrisch verbunden ist, dass im Betrieb eine zweite Wechselspannung (AC2) anliegt,
- der aktive, rückspeisefähigen Gleichrichter (5) und der netzgeführte Gleichrichter (6) jeweils ausgangsseitig (9,10) mit einem Gleichspannungsnetz (4), an welchem im Betrieb eine Netzgleichspannung (DCN) anliegt, elektrisch verbunden sind und
- das Spannungswandlungsmittel (3) derart ausgebildet ist, dass im Betrieb die erste Wechselspannung (AC1) kleiner ist, als die zweite Wechselspannung (AC2).

2. Energieversorgungssystem (1) nach Anspruch 1, wobei durch das Spannungswandlungsmittel (3) die erste Wechselspannung (AC1) bis zu 25% kleiner ist, insbesondere 15% kleiner, als die zweite Wechselspannung (AC2).

3. Energieversorgungssystem (1) nach einem der vorhergehenden Ansprüche, wobei das Spannungswandlungsmittel (3) eingangsseitig (11) mit dem Wechselspannungsnetz (2) und ausgangseitig (12) mit dem aktiven, rückspeisefähigen Gleichrichter (5) elektrisch verbunden ist und wobei das Spannungswandlungsmittel (3) derart ausgebildet ist, im Betrieb aus der Netzwechselspannung (ACN) die erste Wechselspannung (AC1) zu erzeugen, welche kleiner als die Netzwechselspannung (ACN) ist.

4. Energieversorgungssystem (1) nach Anspruch 3, wobei das Spannungswandlungsmittel (3) zur Erzeugung der ersten Wechselspannung (AC1) aus der Netzwechselspannung (ACN) ein Transformator (15) ist, welcher ein Windungszahlverhältnis (WZV) einer ausgangsseitig (12) angeordneten ersten Sekundärwicklung (17) zu einer eingangsseitig (11) angeordneten Primärwicklung (16) zwischen < 1 und >= 0,75, insbesondere 0,85, aufweist.

5. Energieversorgungssystem (1) nach einem der Ansprüche 1 oder 2, wobei das Spannungswandlungsmittel (3) eingangsseitig (11) mit dem Wechselspannungsnetz (2) und ausgangseitig (12) mit dem netzgeführten Gleichrichter (6) elektrisch verbunden ist und wobei das Spannungswandlungsmittel (3) derart ausgebildet ist, im Betrieb aus der Netzwechselspannung (ACN) die zweite Wechselspannung (AC2) zu erzeugen, welche größer als die Netzwechselspannung (ACN) ist.

6. Energieversorgungssystem (1) nach Anspruch 5, wobei das Spannungswandlungsmittel (3) zur Erzeugung der zweiten Wechselspannung (AC2) aus der Netzwechselspannung (ACN) ein Transformator (15) ist, welcher ein Windungszahlverhältnis (WZV) einer ausgangsseitig (12) angeordneten zweiten Sekundärwicklung (18) zu einer eingangsseitige angeordneten (11) Primärwicklung (16) zwischen größer 1 und kleiner oder gleich 1,25, insbesondere 1,15, aufweist.

7. Energieversorgungssystem (1) nach einem der Ansprüche 1 oder 2, wobei das Spannungswandlungsmittel (2)
- eingangsseitig (11) mit dem Wechselspannungsnetz (2) elektrisch verbunden ist,
- ausgangseitig (12) durch einen ersten Ausgang (13) mit dem aktiven, rückspeisefähigen Gleichrichter (5) elektrisch verbunden ist,
- ausgangseitig (12) durch einen zweiten Ausgang (14) mit dem netzgeführten Gleichrichter (6) elektrisch verbunden ist und
- derart ausgebildet ist, im Betrieb aus der Netzwechselspannung (ACN) die erste und die zweite Wechselspannung (AC1,AC2) zu erzeugen.

8. Energieversorgungssystem (1) nach Anspruch 7, wobei
- das Spannungswandlungsmittel (3) zur Erzeugung der ersten Wechselspannung (AC1) und der zweiten Wechselspannung (AC2) aus der Netzwechselspannung (ACN) ein Transformator (15) mit einer Primärwicklung (16) und einer ersten und einer zweiten Sekundärwicklung (17,18) ist,
- die Primärwicklung (16) eingangsseitig (11) mit dem Wechselspannungsnetz (2) elektrisch verbunden ist,
- die erste Sekundärwicklung (17) ausgangsseitig (12) mit dem aktiven, rückspeisefähigen Gleichrichter (5) elektrisch verbunden ist und im Betrieb am ersten Ausgang (13) die erste Wechselspannung (AC1) erzeugt und
- die zweite Sekundärwicklung (18) ausgangsseitig (12) mit dem netzgeführten Gleichrichter (6) elektrisch verbunden ist und im Betrieb am zweiten Ausgang (14) die zweite Wechselspannung (AC2) erzeugt.

9. Energieversorgungssystem (1) nach Anspruch 7, wobei
- das Spannungswandlungsmittel (3) zur Erzeugung der ersten Wechselspannung (AC1) und der zweiten Wechselspannung (AC2) aus der Netzwechselspannung (ACN) ein Transformator (15) mit einer Primärwicklung (16) und einer dritte Sekundärwicklung (23) ist,
- die Primärwicklung (16) eingangsseitig (11) mit dem Wechselspannungsnetz (2) elektrisch verbunden ist,
- die dritte Sekundärwicklung (23) ausgangsseitig (12) mit dem aktiven, rückspeisefähigen Gleichrichter (5) elektrisch verbunden ist und eine erste Wicklungsanzapfung (24) aufweist, welche im Betrieb ausgangsseitig (12) am ersten Ausgang (13) die erste Wechselspannung (AC1) erzeugt, und
- die dritte Sekundärwicklung (23) eine zweite Wicklungsanzapfung (25) aufweist, welche im Betrieb ausgangsseitig (12) am zweiten Ausgang (14) die zweite Wechselspannung (AC2) erzeugt.

10. Energieversorgungssystem (1) nach einem der vorhergehenden Ansprüche, wobei der aktive, rückspeisefähige Gleichrichter (5) eine erste elektrische Brückenschaltung (19) aufweist, welche mit Leistungshalbleitern (20), insbesondere IGBT-Leistungshalbleitermodulen (34) mit antiparalleler Freilaufdiode, für einen vollgesteuerten, rückspeisefähigen Betrieb ausgebildet ist und
wobei der netzgeführte Gleichrichter (6) eine zweite elektrische Brückenschaltung (33) aufweist, welche
- mit Leistungshalbleitern (20), insbesondere Leistungsdioden, für einen ungesteuerten Betrieb ausgebildet ist, oder
- mit Leistungshalbleitern (20), insbesondere einer Kombination von Leistungsdioden (21) und Leistungsthyristoren (22), für einen halbgesteuerten Betrieb ausgebildet ist, oder
- mit Leistungshalbleitern (20), insbesondere Leistungsthyristoren (22), für einen vollgesteuerten Betrieb ausgebildet ist.

11. Energieversorgungssystem (1) nach einem der vorhergehenden Ansprüche, aufweisend
- eine Gleichspannungserfassung (28), welche am Gleichspannungsnetz (DCN) zur Erfassung der Netzgleichspannung (DCN) vorgesehen ist,
- eine erste Wechselspannungserfassung (26), welche eingangsseitig (7) am aktiven, rückspeisefähigen Gleichrichter (5) zur Erfassung der ersten Wechselspannung (AC1) vorgesehen ist und/oder
- eine zweite Wechselspannungserfassung (26), welche eingangsseitig (8) am netzgeführten Gleichrichter (6) zur Erfassung der zweiten Wechselspannung (AC2) vorgesehen ist.

12. Energieversorgungssystem (1) nach einem der vorhergehenden Ansprüche, aufweisend eine übergreifende Steuereinheit (31), eine ersten Steuereinheit (29) des aktiven, rückspeisefähigen Gleichrichters (5) und, sofern der netzgeführte Gleichrichter (6) steuerbar ist, eine zweite Steuereinheit (30) des netzgeführten Gleichrichters (6), wobei die übergreifende Steuereinheit (31) zumindest mit der ersten Steuereinheit (29) mittels einer Datenleitung (32) zur Datenübermittlung verbindbar ist.

13. Verfahren (V) zur Energieversorgung mit einem Energieversorgungssystem (1) nach einem der Ansprüche 1 bis 12, wobei im Betrieb
- die erste Wechselspannung (AC1) kleiner ist, als die zweite Wechselspannung (AC2),
- mittels des aktiven, rückspeisefähigen Gleichrichters (5) eine von der übergeordneten Steuereinheit (31) über die Signalleitung (32) an die erste Steuereinheit (29) des aktiven, rückspeisefähigen Gleichrichters (5) vorgegebene Grundschwingungsblindleistung in das Wechselspannungsnetz (ACN) eingespeist werden kann und/oder
- mittels des aktiven, rückspeisefähigen Gleichrichters (5) eine von der übergeordneten Steuereinheit (31) über die Signalleitung (32) an die erste Steuereinheit (29) des aktiven, rückspeisefähigen Gleichrichters (5) vorgegebene Oberschwingungsleistung in das Wechselspannungsnetz (ACN) eingespeist werden kann.

14. Verfahren (V) nach Anspruch 13, wobei im Betrieb
- die erste Wechselspannung (AC1) durch die erste Wechselspannungserfassung (26) erfasst wird und aus der ersten Wechselspannung (AC1) die zweite Wechselspannung (AC2) durch ein vorgegebenes Übersetzungsverhältnis (UV) des Spannungswandlungsmittels (3), insbesondere des Transformators (15), ermittelt wird oder die zweite Wechselspannung (AC2) durch die zweite Wechselspannungserfassung (27) erfasst wird,
- die Netzgleichspannung (DCN) mittels der Gleichspannungserfassung (28) erfasst wird,
- der netzgeführte Gleichrichter (6) eine erste Wirkleistung aus dem Wechselspannungsnetz (2) in das Gleichspannungsnetz (4) einspeist, solang der Scheitelwert der Spannungsamplitude zwischen zwei der Phasen (LN1,LN2,LN3) der zweiten Wechselspannung (AC2) größer ist, als die Netzgleichspannung (DCN), und
- der aktive, rückspeisefähige Gleichrichter (5) eine zweite Wirkleistung (P2) aus dem Wechselspannungsnetz (2) in das Gleichspannungsnetz (4) zusätzlich zum netzgeführte Gleichrichter (6) einspeisen kann, wenn von der ersten Steuereinheit (29) des aktiven, rückspeisefähigen Gleichrichters (5) ermittelt wird, dass der Scheitelwert der Spannungsamplitude zwischen zwei der Phasen (LN1,LN2,LN3) der zweiten Wechselspannung (AC2) um einen ersten Schwellwertbereich (SW1) größer ist, als die Netzgleichspannung (DCN).

15. Verfahren (V) nach Anspruch 13, wobei im Betrieb
- die erste Wechselspannung (AC1) durch die erste Wechselspannungserfassung (26) erfasst wird und aus der ersten Wechselspannung (AC1) die zweite Wechselspannung (AC2) durch ein vorgegebenes Übersetzungsverhältnis (UV) des Spannungswandlungsmittels (3), insbesondere des Transformators (15), ermittelt wird oder die zweite Wechselspannung (AC2) durch die zweite Wechselspannungserfassung (27) erfasst wird,
- die Netzgleichspannung (DCN) mittels der Gleichspannungserfassung (28) erfasst wird und
- eine dritte Wirkleistung (P3) aus dem Gleichspannungsnetz (4) in das Wechselspannungsnetz (2) rückgespeist werden kann, wenn die erste Steuereinheit (29) des aktiven, rückspeisefähigen Gleichrichters (5) ermittelt, dass die Netzgleichspannung (DCN) um einen zweiten Schwellwertbereich (SW2) größer ist, als der Scheitelwert der Spannungsamplitude zwischen zwei der Phasen (LN1,LN2,LN3) der zweiten Wechselspannung (AC2) .
